# EUROPÄISCHE PATENTSCHRIFT

(11) **EP 0 695 012 B1**
(45) Veröffentlichungstag und Bekanntmachung des Hinweises auf die Patenterteilung: **09.09.1998**
(21) Anmeldenummer: 94111280.7
(22) Anmeldetag: 20.07.1994
(51) Int. Cl.: H02G 5/00

(54) **Verfahren zur Herstellung von flexiblen lamellierten Dehnungsbändern**
Method for the manufacture of flexible, laminated bands for expansion compensation
Procédé de fabrication de bandes de dilatations laminées et flexibles

(43) Veröffentlichungstag der Anmeldung: 31.01.1996
(73) Patentinhaber: KM Europa Metal Aktiengesellschaft, D-49023 Osnabrück (DE)
(72) Erfinder: Biederer, Hans-Hermann, D-49088 Osnabrück (DE)

(56) Entgegenhaltungen:
- EP-A- 0 143 189
- FR-A- 2 224 845
- US-A- 3 911 567

## Beschreibung

Die Erfindung betrifft einerseits ein flexibles lamelliertes Dehnungsband und andererseits ein Verfahren zur Herstellung von flexiblen lamellierten Dehnungsbändern.

Flexible lamellierte Dehnungsbänder dienen zum Anschluß von Stromschienen an elektrische Betriebsmittel und als Verbindungen zwischen Stromschienen-Abschnitten. Sie sind geeignete Mittel zum Ausgleich von Maßabweichungen, zur Minderung von Wärmezwängen, für mechanische Entkopplungen, z.B. um Massenkräfte beim Schalten über die Gerätebefestigung und nicht über die Anschlüsse abzutragen, und für Körperschallentkopplungen. Sie bestehen aus Kupfer und/oder Aluminium bzw. aus einer Legierung dieser Werkstoffe. Sie setzen sich jeweils aus zwei endseitigen Anschlußfahnen und mehreren zwischen den Anschlußfahnen befindlichen, parallel übereinanderliegenden Lamellen zusammen. Die Lamellen sind in der Regel etwa S-förmig oder V-förmig gekrümmt.

Zur Herstellung solcher Dehnungsbänder ist es bekannt, die geforderte Anzahl von vorgeschnittenen Lamellen in Enddicke übereinander zu schichten und anschließend die Endabschnitte auf dem Wege des Warm-Preßschweißens zu Anschlußfahnen fest miteinander zu verbinden. Danach können die Dehnungsbänder auf die Fertigabmessungen gesägt werden. Auf jeden Fall werden anschließend die Ober- und Unterseiten der Anschlußfahnen zur Erzielung einwandfreier Kontaktflächen durch schleifende Bearbeitung geebnet. Je nach Einsatzfall können die Anschlußfahnen auch noch Anschlußbohrungen erhalten. Letztlich erfolgt das Biegen der Lamellen auf Endform.

Nachteilig an dieser Verfahrensweise ist der hohe Anteil manueller Arbeit am einzelnen Dehnungsband. Die Fertigungskosten sind daher fast unabhängig von der Baugröße. Ein weiterer Nachteil besteht darin, daß die Ober- und Unterseiten der Anschlußfahnen nach dem Preßschweißen bearbeitet werden müssen, um ebene Kontaktflächen zu schaffen. Das Preßschweißen selber erfolgt bei erhöhter Temperatur. Dadurch können Gefügeausbildungen wie Grobkorn oder ungleiches Gefüge auftreten mit ungünstigem Einfluß auf die mechanische Belastbarkeit und Lebensdauer der Dehnungsbänder.

Der Herstellungsaufwand ändert sich nur geringfügig, wenn entsprechend einer Modifikation des vorbeschriebenen Verfahrens die übereinander geschichteten Lamellen mit massiven Anschweißstücken als Anschlußfahnen verschweißt werden.

Zum Stand der Technik zählt ferner ein Herstellungsverfahren, wie es in der AT-PS 3 44 812 beschrieben ist. Hierbei werden großflächige Bleche in der Enddicke der späteren Lamellen übereinander geschichtet und entlang zweier parallel zueinander verlaufender Randbereiche durch Sprengschweißung flächig zu einem Blechpaket vereinigt. Im Anschluß daran kann dann das Blechpaket durch parallele Sägeschnitte aufgegliedert und in Dehnungsbänder vereinzelt werden.

Auch bei diesem Verfahren ist es von großem Nachteil, daß der Fertigungsaufwand sehr hoch ist, weil stets solche Bleche verarbeitet werden, deren Dicke letztlich der Dicke der Lamellen der Dehnungsbänder entspricht. Darüberhinaus erfordert das Anpassen der Anschlußfahnen aufgrund des Sprengschweißens sowie der dazu notwendigen diversen Hilfsmittel einen erheblichen Herstellungs-, Zeit- und Personalaufwand.

Der Erfindung liegt die Aufgabe zugrunde, sowohl ein flexibles lamelliertes Dehnungsband als auch ein Verfahren zur Herstellung eines solchen Dehnungsbands zu schaffen, bei welchen eine einfachere wirtschaftliche Fertigung gewährleistet werden kann.

Die Lösung des gegenständlichen Teils dieser Aufgabe besteht im Patentanspruch 1, während die Lösung des verfahrensmäßigen Teils dieser Aufgabe in den kennzeichnenden Merkmalen des Patentanspruchs 2 gesehen wird.

Danach besteht ein grundlegendes Merkmal der Erfindung darin, daß als Ausgangsmaterial jetzt Bleche verwendet werden, deren Dicke stets größer ist als die geforderte Enddicke der Lamellen der Dehnungsbänder. Hiermit wird der besondere Vorteil erzielt, daß nur wenige Blechdicken bereitgestellt werden müssen, um selbst eine größere Anzahl unterschiedlich dicker Lamellen fertigen zu können. Dies erleichtert erheblich die Lagerhaltung und Planung. Desweiteren erlaubt es die Erfindung, die Werkstoffwahl der Dehnungsbänder in Abhängigkeit von den jeweiligen örtlichen Erfordernissen und Einsatzfällen spezifisch bestimmen zu können. Dadurch sind Dehnungsbänder in unterschiedlichen Härtezuständen möglich. Auch können Decklagenbleche für Dehnungsbänder in einer anderen Dicke als die übrigen Lamellen und/oder auch in einem anderen Werkstoff eingesetzt werden. Weiterhin sind Decklagenbleche mit spezifischer Oberflächenbehandlung, wie z.B. Versilberung, möglich. Die Behandlung kann sich auf einen Teil der Oberfläche (z.B. die Anschlußbereiche) oder bei Bedarf auch auf die gesamte Oberfläche erstrecken.

Ein weiterer Vorteil ergibt sich durch das Walzen des Blechpakets dahingehend, daß die Kontaktflächen der Anschlußfahnen sauber und eben sind. Ein Nachbearbeiten, insbesondere ein Nachschleifen, ist nicht mehr erforderlich. Auch werden sehr enge gleichmäßige Toleranzen, insbesondere der Anschlußfahnen, erzielt.

Besonders wirtschaftlich erweist sich die Erfindung dort, wo Dehnungsbänder extrem kleiner Abmessungen gefertigt werden sollen.

Die Erfindung erlaubt es mithin, Dehnungsbänder dadurch zu fertigen, daß die Bleche jeweils eines Blechpakets randseitig unter Bildung der Anschlußbereiche miteinander verbunden werden. Es ist aber auch denkbar, daß mindestens zwei Blechpakete so miteinander verbunden werden, daß aus dem Verbindungsbereich je ein Anschlußbereich für die beiden Blechpakete gefertigt werden kann.

Insgesamt ist also festzuhalten, daß dank der erfindungsgemäßen Merkmale die Herstellung von flexiblen lamellierten Dehnungsbändern erheblich vereinfacht werden kann und dennoch eine große Variationsbreite an Dehnungsbändertypen im Hinblick auf den jeweiligen Einsatzfall möglich ist, ohne daß hierfür Ausgangsbleche bereitgestellt werden müssen, deren Dicke bereits der Dicke der Lamellen entspricht.

Das Kaltwalzen des Blechpakets kann bei Bedarf mit einer vergleichsweise geringen Dickenreduzierung der einzelnen Bleche erfolgen. Eine solche Verfahrensweise gelangt beispielsweise dann zur Anwendung, wenn große Dehnungsbänder hergestellt werden sollen. Die Dickenreduzierung von dann etwa 10 % dient im wesentlichen nur zum Glätten und Richten des Blechpakets.

Demgegenüber besteht eine besonders vorteilhafte Verfahrensweise in den Merkmalen des Patentanspruchs 3. Hiermit kann äußerst feinfühlig auf die jeweiligen Forderungen der Praxis reagiert werden. Unter Umständen ist auch ein zusätzliches Walzen quer zur Längsrichtung der Randseiten noch möglich.

Bei der im Patentanspruch 4 beschriebenen Ausführungsform werden die Bleche durch massive Randleisten miteinander verbunden. Das Verbinden der Bleche mit den Randleisten kann auf diverse Art und Weise durchgeführt werden.

Bevorzugt werden die Bleche und die Randleisten gemäß Patentanspruch 5 aber durch Elektronenstrahlschweißung miteinander verbunden.

Es ist entsprechend den Merkmalen des Patentanspruchs 6 auch möglich, parallele Randstreifen der Bleche unmittelbar miteinander zu verbinden. Dies kann beispielsweise durch Löten mit zwischengelegten Lötfolien oder mit Hilfe verschiedener bekannter Schweißarten durchgeführt werden.

Das Vereinzeln der Dehnungsbänder aus einem kaltgewalzten Blechpaket kann in bekannter Weise z.B. durch Sägen oder Stanzen bewirkt werden. Besonders vorteilhaft erweisen sich aber die Merkmale des Patentanspruchs 7, weil mit Hochdruckwasserstrahlen ein gratfreies Schneiden auch vergleichsweise sehr dünner Lamellen ohne Härteveränderung möglich ist.

Die Erfindung ist nachfolgend anhand eines in den Zeichnungen dargestellten Ausführungsbeispiels näher erläutert. Es zei gen:
- Figur 1: in der Perspektive ein Blechpaket aus einer Blechschichtung mit seitlich angeschweißten massiven Randleisten;
- Figur 2: ebenfalls in der Perspektive das Blechpaket der Figur 1 nach einer Dickenreduzierung durch Kaltwalzen und
- Figur 3: in der Perspektive ein von dem gewalzten Blechpaket der Figur 2 abgeteiltes Dehnungsband.

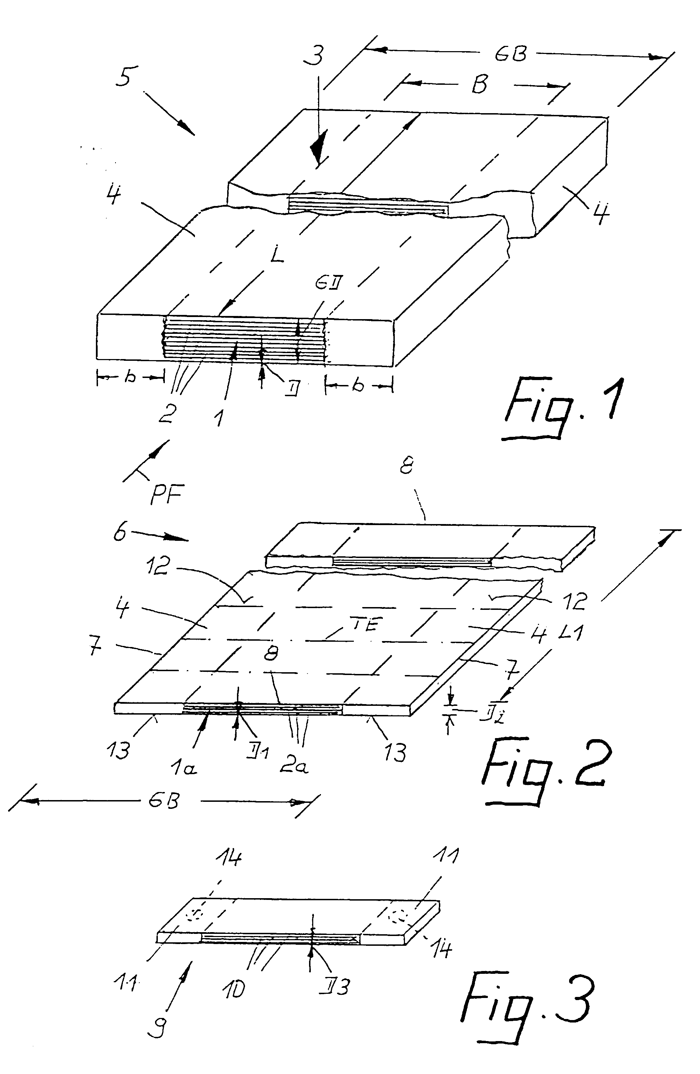

Mit 1 ist in der Figur 1 eine Blechschichtung aus fünfzig übereinandergelegten Kupferblechen 2 mit einer Dicke D von 1,2 mm bezeichnet. Die Länge L der Kupferbleche 2 beträgt 400 mm und ihre Breite B 220 mm.

Die Blechschichtung 1 aus den aufeinander gelegten fünfzig Kupferblechen 2 hat eine Gesamtdicke GD von 60 mm. Diese Blechschichtung 1 wird mit Hilfe eines Elektronenschweißstrahls 3 mit zwei massiven Randleisten 4 aus Kupfer zu einem Blechpaket 5 mit einer Gesamtbreite GB von 300 mm fest verbunden. Die Randleisten 4 sind ebenfalls 60 mm dick. Ihre Breite b beträgt 40 mm.

Das Blechpaket 5 der Figur 1 wird anschließend durch Kaltwalzen mit zwei eingeschalteten Zwischenglühungen bei 380 °C unter Schutzgas in Richtung des Pfeils PF, also in Längsrichtung der Randleisten 4 gemäß Figur 2 zu einem dünneren Blechpaket 6 von 2400 mm Länge L₁ und 10 mm Dicke D₂ bei gleichbleibender Gesamtbreite GB von 300 mm ausgewalzt. Die Oberseiten 12 und Unterseiten 13 sind durch das Kaltwalzen völlig eben. Die Dicke D₁ der Bleche 2a in der Blechschichtung la entspricht dann der geforderten Enddicke D₃ der Lamellen 10 eines aus Figur 3 erkennbaren Dehnungsbands 9.

Im Anschluß daran werden die Längskanten 7 des gewalzten Blechpakets 6 durch einen Sägeschnitt besäumt und auf diese Weise eine Fertigbreite des Blechpakets 6 von letztlich 284 mm hergestellt.

Nach Besäumung der 284 mm langen Schmalseiten 8 des gewalzten Blechpakets 6 werden dann mit Hilfe einer Hochdruckwasserstrahlschneidanlage die aus der Figur 3 ersichtlichen einzelnen 28 mm breiten Dehnungsbänder 9 mit Lamellen 10 und endseitigen Anschlußfahnen 11 abgeteilt und vereinzelt. Unter Berücksichtigung von Sägeschnitt und Besäumbreite können somit achtzig Dehnungsbänder 9 erzeugt werden. Die Teilungsebenen sind in der Figur 2 mit TE gekennzeichnet.

Die Dehnungsbänder 9 werden letztlich entgratet und mit Bezug auf die endseitigen Anschlußfahnen 11 ggf. mit Bohrungen 14 ausgestattet. Danach wird bevorzugt noch ein Weichglühen bei 380 °C unter Schutzgas vorgenommen.

Als letzter Arbeitsgang erfolgt eine S- oder V-förmige Verformung der Lamellen 10 des Dehnungsbands 9.

### Bezugszeichenaufstellung

- 1 -: Blechschichtung
1a - Blechschichtung
- 2 -: Bleche v. 1
2a - Bleche v. 2a
- 3 -: Elektronenschweißstrahl
- 4 -: Randleisten
- 5 -: Blechpaket
- 6 -: gewalztes Blechpaket
- 7 -: Längskanten v. 6
- 8 -: Schmalseiten v. 6
- 9 -: Dehnungsbänder
- 10 -: Lamellen
- 11 -: Anschlußfahnen
- 12 -: Oberseiten v. 7
- 13 -: Unterseiten v. 7
- 14 -: Bohrungen in 11

- B -: Breite v. 2
- b -: Breite v. 4
- D -: Dicke v. 2
- D₁ -: Dicke v. 2a
- D₂ -: Dicke v. 6
- D₃ -: Dicke v. 10
- GB -: Gesamtbreite v. 5 u. 6
- GD -: Gesamtdicke v. 1
- L -: Länge v. 2
- L₁ -: Länge v. 6
- PF -: Walzrichtung
- TE -: Teilungsebenen

## Patentansprüche

1. Flexibles lamelliertes Dehnungsband (9) aus Kupfer und/oder Aluminium bzw. aus einer Legierung dieser Werkstoffe zur Verbindung insbesondere von Stromschienen, das aus zwei endseitigen Anschlußfahnen (11) und mehreren zwischen den Anschlußfahnen (11) befindlichen, parallel übereinanderliegenden Lamellen (10) besteht, **dadurch gekennzeichnet,** daß das Dehnungsband (9) durch Abteilen eines aus aufeinandergeschichteten eine bezüglich der Enddicke (D₃) der Lamellen (10) größere Dicke (D) aufweisenden und an zwei parallel zueinander verlaufenden Randseiten miteinander verbundenen Blechen (2) gebildeten und anschließend gewalzten Blechpakets (5) hergestellt ist.

2. Verfahren zur Herstellung von flexiblen lamellierten Dehnungsbändern (9) zur Verbindung insbesondere von Stromschienen, bei welchem Bleche (2) aus Kupfer und/oder Aluminium bzw. aus einer Legierung dieser Werkstoffe aufeinandergeschichtet und an zwei parallel zueinander verlaufenden Randseiten fest zu einem Blechpaket (5) miteinander verbunden werden, worauf dieses Blechpaket (5) quer zur Längsrichtung der Randseiten geteilt und in mehrere, jeweils aus endseitigen Anschlußfahnen (11) und sich zwischen den Anschlußfahnen (11) erstreckenden Lamellen (10) bestehende Dehnungsbänder (9) vereinzelt wird, **dadurch gekennzeichnet,** daß zunächst aufeinandergeschichtete Bleche (2) mit einer größeren Dicke (D) als die geforderte Enddicke (D₃) der Lamellen (10) der Dehnungsbänder (9) zu einem Blechpaket (5) randseitig verbunden und anschließend die Bleche (2) durch in Längsrichtung der Randseiten erfolgendes Kaltwalzen des Blechpakets (5) auf die gewünschte Enddicke (D₃) der Lamellen (10) und der Anschlußfahnen (11) gebracht werden, worauf die Vereinzelung des gewalzten Blechpakets (6) in Dehnungsbänder (9) durchgeführt wird.

3. Verfahren nach Patentanspruch 2, **dadurch gekennzeichnet,** daß das Blechpaket (5) in mehreren Stichen mit Zwischenglühungen unter Schutzgas gewalzt wird.

4. Verfahren nach Patentanspruch 2 oder 3, **dadurch gekennzeichnet,** daß die Bleche (2) durch massive Randleisten (4) miteinander verbunden werden.

5. Verfahren nach Patentanspruch 4, **dadurch gekennzeichnet,** daß die Bleche (2) und die Randleisten (4) durch Elektronenstrahlschweißung miteinander verbunden werden.

6. Verfahren nach Patentanspruch 2 oder 3, **dadurch gekennzeichnet,** daß die Bleche (2) randseitig streifenartig miteinander verbunden werden.

7. Verfahren nach einem der Patentansprüche 2 bis 6, **dadurch gekennzeichnet,** daß das Vereinzeln der Dehnungsbänder (9) aus dem gewalzten Blechpaket (6) durch Schneiden mit Hochdruckwasserstrahlen bewirkt wird.

## Claims

1. Flexible laminated expansion joint (9) made of copper and/or aluminium or of an alloy of these materials for connecting busbars in particular, which consists of two connecting lugs (11) disposed at the ends and of a plurality of strips (10) lying parallel one upon another between the connecting lugs (11), characterised in that the expansion joint (9) is produced by dividing a bundle of sheets (5) formed of sheets (2) stacked one upon another and exhibiting a thickness (D) greater than the final thickness (D₃) of the strips (10) and joined together at two edge sides running parallel to one another and then rolled.

2. Method for producing flexible laminated expansion joints (9) for connecting busbars in particular, in which sheets (2) made of copper and/or aluminium or of an alloy of these materials are stacked one upon another and joined securely together at two edge sides running parallel to one another to form a bundle of sheets (5), whereupon this bundle of sheets (5) is divided transversely to the longitudinal direction of the edge sides and separated into a plurality of expansion joints (9) consisting in each case of connecting lugs (11) disposed at the ends and strips (10) extending between the connecting lugs (11), characterised in that sheets (2) with a greater thickness (D) than the required final thickness (D₃) of the strips (10) of the expansion joints (9) are initially stacked one upon another and then joined together at the edges to form a bundle of sheets (5) and then the sheets (2) are brought to the required final thickness (D₃) for the strips (10) and the connecting lugs (11) by cold rolling of the bundle of sheets (5) in the longitudinal direction of the edge sides, whereupon the rolled bundle of sheets (6) is separated into expansion joints (9).

3. Method according to patent claim 2, characterised in that the bundle of sheets (5) is rolled with a plurality of passes with intermediate annealing operations under shielding gas.

4. Method according to patent claim 2 or 3, characterised in that the sheets (2) are joined together by solid edge pieces (4).

5. Method according to patent claim 4, characterised in that the sheets (2) and the edge pieces (4) are joined together by electron beam welding.

6. Method according to patent claim 2 or 3, characterised in that the sheets (2) are joined together at the edges in strips.

7. Method according to one of patent claims 2 to 6, characterised in that the expansion joints (9) are separated from the rolled bundle of sheets (6) by cutting with high-pressure water jets.

## Revendications

1. Joint de dilatation flexible à lamelles (9) en cuivre et/ou en aluminium ou en un alliage de ces matières servant à relier en particulier des barres conductrices, qui se compose de deux bornes de raccordement aux extrémités (11) et de plusieurs lamelles (10), qui se trouvent entre les bornes de raccordement (11) et qui sont disposées en parallèle les unes au dessus des autres,
caractérisé en ce que
le joint de dilatation (9) est fabriqué en divisant un paquet de tôles (5), qui est formé à partir de tôles (2) mises en couche les unes au-dessus des autres, présentant une épaisseur (D) plus grande par rapport à l'épaisseur finale (D3) des lamelles (10) et reliées les unes aux autres par deux bords latéraux qui s'étendent parallèlement l'un à l'autre, et ensuite laminé.

2. Procédé de fabrication de joints de dilatation flexibles à lamelles (9) servant à relier en particulier des barres conductrices, procédé dans lequel on forme une couche de tôles (2) en cuivre et/ou en aluminium ou en un alliage de ces matières en les empilant les unes sur les autres, et en les reliant les unes aux autres sur deux côtés latéraux s'étendant en parallèle l'un par rapport à l'autre de façon solidaire à un paquet de tôles (5), ce paquet de tôles (5) étant divisé perpendiculairement au sens longitudinal des côtés latéraux et étant démarié en plusieurs joints de dilatation (9) se composant de bornes terminales de raccordement (11) et de lamelles (10) qui s'étendent entre les bornes de raccordement (11),
caractérisé en ce que
l'on relie d'abord des tôles (2) empilées en couches les unes sur les autres ayant une épaisseur (D) plus grande que l'épaisseur (D₃) finale, requise des lamelles (10) des joints de dilatation (9) pour former un paquet de tôles (5) du côté des bords et l'on met ensuite les tôles (2), par laminage à froid du paquet de tôle (5), ayant lieu dans le sens longitudinal des côtés de bordure, à l'épaisseur finale requise (D3) des lamelles (10) et des bornes de raccordement (11), le démariage du paquet de tôles laminé (6) étant effectué dans les joints de dilatation (9).

3. Procédé selon la revendication 2,
caractérisé en ce que
le paquet de tôles (5) est laminé en plusieurs passes avec des opérations intermédiaires de recuit sous la protection d'un gaz protecteur.

4. Procédé selon la revendication 2 ou 3,
caractérisé en ce que
les tôles (2) sont reliées par des bandeaux massifs de bordure (4) les unes aux autres.

5. Procédé selon la revendication 4,
caractérisé en ce que
les tôles (2) et les bandeaux de bordure (4) sont reliés les uns aux autres par soudage par bombardement électronique.

6. Procédé selon la revendication 2 ou 3,
caractérisé en ce que
les tôles (2) sont reliées les unes aux autres du côté des bordures à la manière de rubans.

7. Procédé selon l'une des revendications 2 à 6,
caractérisé en ce que
le démariage des joints de dilatation (9) est effectué à partir du paquet de tôles laminé (6) par cisaillement avec des jets d'eau à haute pression.
